(19) Europäisches Patentamt
European Patent Office
Office européen des brevets

(11) EP 0 645 089 B1

(12) EUROPÄISCHE PATENTSCHRIFT

(45) Veröffentlichungstag und Bekanntmachung des Hinweises auf die Patenterteilung:
**17.04.1996 Patentblatt 1996/16**

(51) Int. Cl.[6]: **A01N 47/14**
// (A01N47/14, 37:50)

(21) Anmeldenummer: **94114504.7**

(22) Anmeldetag: **15.09.1994**

# (54) Fungizide Mischungen

Fungicidal mixtures

Mélanges fongicides

(84) Benannte Vertragsstaaten:
**AT BE CH DE DK ES FR GB GR IE IT LI NL PT SE**

(30) Priorität: **24.09.1993 DE 4332628**

(43) Veröffentlichungstag der Anmeldung:
**29.03.1995 Patentblatt 1995/13**

(73) Patentinhaber: **BASF Aktiengesellschaft**
**D-67063 Ludwigshafen (DE)**

(72) Erfinder:
- **Wingert, Horst, Dr.**
  **D-68159 Mannheim (DE)**
- **Sauter, Hubert, Dr.**
  **D-68167 Mannheim (DE)**
- **Ammermann, Eberhard, Dr.**
  **D-64646 Heppenheim (DE)**
- **Lorenz, Gisela, Dr.**
  **D-67434 Neustadt (DE)**
- **Saur, Reinhold, Dr.**
  **D-67459 Böhl-Iggelheim (DE)**
- **Schelberger, Klaus**
  **D-67161 Gönnheim (DE)**
- **Hampel, Manfred, Dr.**
  **D-67435 Neustadt (DE)**

(56) Entgegenhaltungen:
**EP-A- 0 038 570** **EP-A- 0 253 213**
**EP-A- 0 477 631** **GB-A- 2 267 644**

- **CHEMICAL ABSTRACTS, vol. 118, no. 23, 7. Juni 1993, Columbus, Ohio, US; abstract no. 228112, E.AMMERMANN ET AL. 'BAS 490 F - a broad-spectrum fungicide with a new mode of action'**
- **RESEARCH DISCLOSURE, Nr.348, April 1993, HAVANT GB Seite 267 DISCLOSED ANONYMOUSLY '34874 Mixtures of Fungicides and Herbicides'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 645 089 B1

Printed by Rank Xerox (UK) Business Services
2.11.2/3.4

## Beschreibung

Die vorliegende Erfindung betrifft eine fungizide Mischung, welche

a) das Oximethercarbonsäureamid der Formel I,

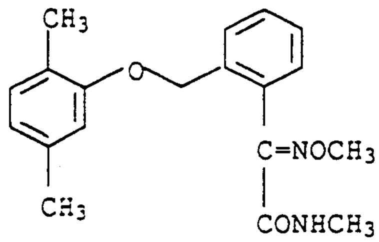

und

b) ein Dithiocarbamat (II) ausgewählt aus der Gruppe

- Mangan-ethylenbis(dithiocarbamat) (Zinkkomplex) (IIa),
- Mangan-ethylenbis(dithiocarbamat) (IIb),
- Zinkammoniat-ethylenbis(dithiocarbamat) (IIc) und
- Zink-ethylenbis(dithiocarbamat) (IId)

in einer synergistisch wirksamen Menge enthält.

Außerdem betrifft die Erfindung Verfahren zur Bekämpfung von Schadpilzen mit Mischungen der Verbindungen I und II und die Verwendung der Verbindung I und der Verbindungen II zur Herstellung derartiger Mischungen.

Die Verbindung der Formel I, ihre Herstellung und ihre Wirkung gegen Schadpilze ist aus der Literatur bekannt (EP-A 477 631).

Ebenfalls bekannt sind die Dithiocarbamate II (IIa: common name: Mancozeb, US-A 3,379,610; IIb: common name: Maneb, US-A 2,504,404; IIc: ehem. common name: Metiram, US-A 3,248,400; IId: common name: Zineb, US-A 2,457,674), deren Herstellung und deren Wirkung gegen Schadpilze.

Im Hinblick auf eine Senkung der Aufwandmengen und eine Verbesserung des Wirkungsspektrums der bekannten Verbindungen lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindung I und der Verbindungen II oder bei Anwendung der Verbindung I und der Verbindungen II nacheinander Schadpilze besser bekämpfen lassen als mit den Einzelverbindungen.

Die Verbindung der Formel I kann in Bezug auf die C=N -Doppelbindung in der E- oder der Z-Konfiguration (in Bezug auf die Gruppierung Carbonsäurefunktion) vorliegen. Demgemäß kann sie in der erfindungsgemäßen Mischung jeweils entweder als reines E- oder Z-Isomer oder als E/Z-Isomerenmischung Verwendung finden. Bevorzugt findet die E/Z-Isomerenmischung oder das E-Isomer Anwendung, wobei das E-Isomer besonders bevorzugt ist.

Die Verbindung I ist wegen des basischen Charakters der NH-Gruppierung in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis

achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. die gleichzeitige gemeinsame oder getrennte Verwendung der Verbindungen I und II zeichnen sich durch eine hervorragende Wirkung gegen ein breites Spektrum von pflanzenpathogenen Pilzen, insbesondere aus der Klasse der Ascomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 2000:1 bis 5:1, vorzugsweise 1000:1 bis 5:1, insbesondere 500:1 bis 5:1 (II:I) angewendet.

Die Aufwandmengen der erfindungsgemäßen Mischungen liegen je nach Art des gewünschten Effekts für die Verbindungen I bei 0,005 bis 0,5 kg/ha, vorzugsweise 0,01 bis 0,5 kg/ha, insbesondere 0,01 bis 0,3 kg/ha. Die Aufwandmengen für die Verbindungen II liegen entsprechend bei 0,1 bis 10 kg/ha, vorzugsweise 0,5 bis 5 kg/ha, insbesondere 1 bis 4 kg/ha.

Bei der Saatgutbehandlung werden im allgemeinen Aufwandmengen an Mischung von 0,001 bis 100 g/kg Saatgut, vorzugsweise 0,01 bis 50 g/kg, insbesondere 0,01 bis 10 g/kg verwendet.

Sofern für Pflanzen pathogene Schadpilze zu bekämpfen sind erfolgt die getrennte oder gemeinsame Applikation der Verbindungen I und II oder der Mischungen aus den Verbindungen I und II durch besprühen oder bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I oder II bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Beispiele zur synergistischen Wirkung der erfindungsgemäßen Mischungen gegen Schadpilze.

Die fungizide Wirkung der Verbindung und der Mischungen ließ sich durch folgende Versuche zeigen:
Die Wirkstoffe wurden getrennt oder gemeinsam als 20 %ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgte Feststellung der befallenen Blattflächen in Prozent. Diese Prozent-Werte wurden in Wirkungsgrade umgerechnet. Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Wirksamkeit gegen Rebenperonospora

Blätter von Topfreben der Sorte "Müller-Thurgau" wurden mit wäßriger Spritzbrühe, die 80 % Wirkstoff und 20 % Emulgiermittel in der Trockensubstanz enthielt, besprüht. Um die Wirkungsdauer der Wirkstoffe beurteilen zu können, wurden die Pflanzen nach dem Antrocknen des Spritzbelages 8 Tage im Gewächshaus aufgestellt. Erst dann wurden die Blätter mit einer Zoosporenaufschwemmung von Plasmopara viticola (Rebenperonospora) infiziert. Danach wurden die Reben zunächst für 48 Stunden in einer wasserdampfgesättigten Kammer bei 24°C und anschließend für 5 Tage in einem Gewächshaus bei Temperaturen zwischen 20 und 30°C aufgestellt. Nach dieser Zeit wurden die Pflanzen zur Beschleunigung des Sporangienträgerausbruchs abermals für 16 Stunden in der feuchten Kammer aufgestellt. Dann erfolgte die Beurteilung des Ausmaßes des Pilzausbruchs auf den Blattunterseiten.

| Wirkstoff | Wirkstoffkonzentration in der Spritzbrühe in ppm | Wirkungsgrad in % der unbehandelten Kontrolle |
|---|---|---|
| Kontrolle (unbehandelt) | - | 0 |
| I. | 31 | 93,5 |
| | 16 | 87 |
| II.b | 310 | 48 |
| | 160 | 35,3 |
| Erfindungsmäßige Mischung | beobachteter Wirkungsgrad | berechneter Wirkungsgrad*) |
| I + II 31 + 310 Mischung 1:10 | 99 | 96 |
| I + II 16 + 160 Mischung 1:10 | 99 | 91 |

*) berechnet nach der Colby-Formel

Aus den Ergebnissen des Versuches geht hervor, daß der beobachtete Wirkungsgrad in allen Mischungsverhältnissen höher ist als der nach der colby-Formel vorausberechnete Wirkungsgrad.

## Patentansprüche

1. Fungizide Mischung, enthaltend

   a) das Oximethercarbonsäureamid der Formel I,

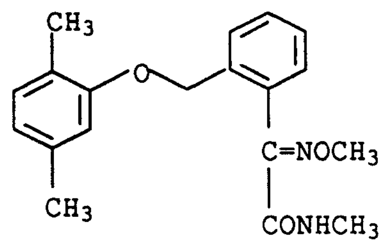

   und
   b) ein Dithiocarbamat (II) ausgewählt aus der Gruppe

   - Mangan-ethylenbis(dithiocarbamat) (Zinkkomplex) (IIa),
   - Mangan-ethylenbis(dithiocarbamat) (IIb),
   - Zinkammoniat-ethylenbis(dithiocarbamat) (IIc) und
   - Zink-ethylenbis(dithiocarbamat) (IId)

   in einer synergistisch wirksamen Menge.

2. Fungizide Mischung nach Anspruch 1, enthaltend das Oximethercarbonsäureamid der Formel I gemäß Anspruch 1 und Mangan-ethylenbis(dithiocarbamat) (Zinkkomplex) (IIa).

3. Fungizide Mischung nach Anspruch 1, enthaltend das Oximethercarbonsäureamid der Formel I gemäß Anspruch 1 und Mangan-ethylenbis(dithiocarbamat) (IIb).

4. Fungizide Mischung nach Anspruch 1, enthaltend das Oximethercarbonsäureamid der Formel I gemäß Anspruch 1 und Zinkammoniat-ethylenbis(dithiocarbamat) (IIc).

5. Fungizide Mischung nach Anspruch 1, enthaltend das Oximethercarbonsäureamid der Formel I gemäß Anspruch 1 und Zink-ethylenbis(dithiocarbamat) (IId).

6. Fungizide Mischung nach Anspruch 1, dadurch gekennzeichnet, daß das Gewichtsverhältnis der Verbindung II zu der Verbindung I 2000:1 bis 5:1 beträgt.

7. Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit der Verbindung der Formel I gemäß Anspruch 1 und der Verbindung der Formel II gemäß Anspruch 1 behandelt.

8. Verfahren nach Anspruch 7, dadurch gekennzeichnet, daß man die Verbindung I gemäß Anspruch 1 und die Verbindung II gemäß Anspruch 1 gleichzeitig gemeinsam oder getrennt oder nacheinander ausbringt.

9. Verfahren nach Anspruch 7, dadurch gekennzeichnet, daß man die Schadpilze, deren Lebensraum oder die von ihnen freizuhaltenden Pflanzen, Samen, Böden, Flächen, Materialien oder Räume mit 0,005 bis 0,5 kg/ha der Verbindung I gemäß Anspruch 1 behandelt.

10. Verfahren nach Anspruch 7, dadurch gekennzeichnet, daß man die Schadpilze, deren Lebensraum oder die von ihnen freizuhaltenden Pflanzen, Samen, Böden, Flächen, Materialien oder Räume mit 0,1 bis 10 kg/ha einer Verbindung II gemäß Anspruch 1 behandelt.

11. Verwendung der Verbindung I gemäß Anspruch 1 zur Herstellung von fungizid wirksamen synergistischen Mischungen gemäß Anspruch 1.

12. Verwendung einer Verbindungen II gemäß Anspruch 1 zur Herstellung von fungizid wirksamen synergistischen Mischungen gemäß Anspruch 1.

## Claims

1. A fungicidal mixture containing

   a) the oxime ether carboxamide of the formula I

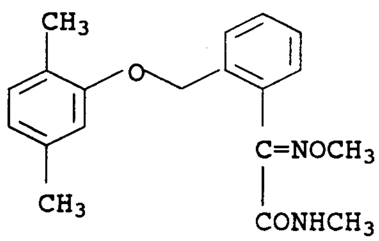

   and
   b) a dithiocarbamate (II) selected from the group

   - manganese ethylenebis(dithiocarbamate) (zinc complex) (IIa),
   - manganese ethylenebis(dithiocarbamate) (IIb),
   - zinc ammoniate ethylenebis(dithiocarbamate) (IIc) and
   - zinc ethylenebis(dithiocarbamate) (IId)

   in a synergistically active amount.

2. A fungicidal mixture as claimed in claim 1, containing the oxime ether carboxamide of the formula I as claimed in claim 1 and manganese ethylenebis(dithiocarbamate) (zinc complex) (IIa).

3. A fungicidal mixture as claimed in claim 1, containing the oxime ether carboxamide of the formula I as claimed in claim 1 and manganese ethylenebis(dithiocarbamate) (IIb).

4. A fungicidal mixture as claimed in claim 1, containing the oxime ether carboxamide of the formula I as claimed in claim 1 and zinc ammoniate ethylenebis(dithiocarbamate) (IIc).

**5.** A fungicidal mixture as claimed in claim 1, containing the oxime ether carboxamide of the formula I as claimed in claim 1 and zinc ethylenebis(dithiocarbamate) (IId).

**6.** A fungicidal mixture as claimed in claim 1, wherein the weight ratio of the compound II to the compound I is from 2000:1 to 5:1.

**7.** A process for controlling harmful fungi, which comprises treating the harmful fungi, their environment or the plants, seeds, soils, surfaces, materials or spaces to be kept free from them with the compound of the formula I as claimed in claim 1 and the compound of the formula II as claimed in claim 1.

**8.** A process as claimed in claim 7, wherein the compound I as claimed in claim 1 and the compound II as claimed in claim 1 are applied simultaneously jointly or separately, or in succession.

**9.** A process as claimed in claim 7, wherein the harmful fungi, their environment or the plants, seeds, soils, surfaces, materials or spaces to be kept free from them are treated with from 0.005 to 0.5 kg/ha of the compound I as claimed in claim 1.

**10.** A process as claimed in claim 7, wherein the harmful fungi, their environment or the plants, seeds, soils, surfaces, materials or spaces to be kept free from them are treated with from 0.1 to 10 kg/ha of a compound II as claimed in claim 1.

**11.** The use of the compound I as claimed in claim 1 for the production of fungicidally active synergistic mixtures as claimed in claim 1.

**12.** The use of a compound II as claimed in claim 1 for the production of fungicidally active synergistic mixtures as claimed in claim 1.

**Revendications**

**1.** Mélange fongicide, contenant

a) l'amide d'acide oximéthercarboxylique de formule I

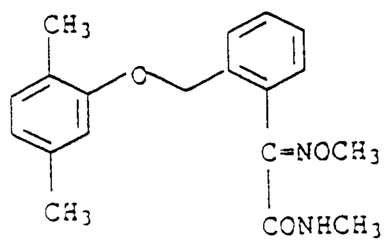

b) un dithiocarbamate (II) choisi dans le groupe composé de

- Mangan-éthylènebis (dithiocarbamate) (complexe de zinc) (IIa),
- Mangan-éthylènebis (dithiocarbamate) (IIb),
- ammoniate-éthylènebis (dithiocarbamate) (IIc) et
- éthylènebis de zinc (dithiocarbamte) (IId)

en une quantité offrant une efficacité synergique.

**2.** Mélange fongicide selon la revendication 1, contenant l'amide d'acide oximéthercarboxylique de formule I selon la revendication 1 et du menganéthylènebis (dithiocarbamate) (complexe de zinc) (IIa).

**3.** Mélange fongicide selon la revendication 1, contenant l'amide d'acide oximéthercarboxylique de formule I selon la revendication 1 et du menganéthylènebis (dithiocarbamate) (IIb).

4. Mélange fongicide selon la revendication 1, contenant l'amide d'acide oximéthercarboxylique de formule I selon la revendication 1 et de l'ammoniate-éthylènebis (dithiocarbamate) (IIc).

5. Mélange fongicide selon la revendication 1, contenant l'amide d'acide oximéthercarboxylique de formule I selon la revendication 1 et du éthylènebis de zinc (dithiocarbamate) (complexe de zinc) (IId).

6. Mélange fongicide selon la revendication 1, caractérisé en ce que le rapport en poids entre le composé II et le composé I est de 2000:1 à 5:1.

7. Procédé de lutte contre les champignons nuisibles, caractérisé par le fait que les champignons nuisibles, leur biotope ou les plantes, semences, sols, surfaces, matériaux ou locaux qu'il faut conserver exempts de ceux-ci sont traités avec le composé de formule I suivant la revendication 1 et le composé de formule II suivant la revendication 1.

8. Procédé selon la revendication 7, caractérisé en ce qu'on applique le composé I de la revendication 1 et le composé II de la revendication 1 simultanément, conjointement ou séparément, ou l'un après l'autre.

9. Procédé selon la revendication 7, caractérisé en ce que les champignons nuisibles, leur biotope ou les plantes, semences, sols, surfaces, matériaux ou locaux à maintenir exempts de ceux-ci sont traités avec 0,005 à 0,5 kg du composé I selon la revendication 1.

10. Procédé selon la revendication 7, caractérisé en ce que les champignons nuisibles, leur biotope vital ou les plantes, semences, sols, surfaces, matériaux ou locaux à maintenir exempts de ceux-ci sont traités avec 0,1 à 10 kg/ha du composé II selon la revendication 1.

11. Utilisation du composé I selon la revendication 1, pour préparer des mélanges à action synergique, efficaces comme fongicides, selon la revendication 1.

12. Utilisation d'un composé II selon la revendication 1, pour préparer des mélanges à action synergique, efficaces comme fongicides, selon la revendication 1.